# FASCICULE DE BREVET EUROPEEN

(11) **EP 0 647 817 B1**
(45) Date de publication et mention de la délivrance du brevet: **04.06.1997**
(21) Numéro de dépôt: 94402207.8
(22) Date de dépôt: 04.10.1994
(51) Int. Cl.: F23R 3/00

(54) **Chambre de combustion à double paroi**
Doppelhäuser einer Brennkammer
Double-walled combustion chamber

(30) Priorité: 06.10.1993 FR 9311897
(43) Date de publication de la demande: 12.04.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Ambrogi, Christine, F-91080 Courcouronnes (FR); Lancelot, Eric, F-77000 Melun (FR); Ansart, Denis, F-77590 Bois le roi (FR); Meunier, Serge, F-77820 Le Chatelet en brie (FR)

(56) Documents cités:
- EP-A- 0 248 731
- EP-A- 0 387 123
- FR-A- 2 158 572
- FR-A- 2 567 250
- GB-A- 2 074 308
- US-A- 4 480 436
- US-A- 4 614 082

## Description

La présente invention concerne les chambres de combustion pour turboréacteurs d'aviation.

Elle concerne plus précisément une chambre de combustion pour turboréacteur comportant une paroi structurelle recouverte sur l'une de ses faces par au moins une couronne de tuiles juxtaposées circonférentiellement, ladite couronne étant accrochée par ses bords amont et aval dans deux rainures opposées délimitées chacune par une aile annulaire espacée de ladite paroi structurelle.

Une telle chambre est connue par le brevet US 4,480,436 qui décrit une chambre dans laquelle la paroi structurelle est formée d'une pluralité de secteurs espacés circonférentiellement qui sont reliés entre eux après positionnement des tuiles par coulissement dans les portions de rainures associées à chaque secteur. Le remplacement d'une tuile dans une chambre de combustion de ce type nécessite le démontage des secteurs et le remontage de l'ensemble après remplacement de la tuile.

De plus, les secteurs sont munis sur leurs bords axiaux de brides permettant la liaison des secteurs entre eux par des moyens de fixation, ce qui entraîne une augmentation de poids de la chambre de combustion.

Le but de la présente invention est de proposer une chambre de combustion du type mentionné ci-dessus, dans laquelle le montage des tuiles et le remplacement des tuiles puissent être réalisés sans démontage de la paroi structurelle.

Le but est atteint selon l'invention par le fait que l'une au moins des ailes comporte une découpe circonférentielle adaptée pour permettre le montage de ladite couronne de tuiles par introduction successive des tuiles de ladite couronne par ladite découpe et engagement par rotation dans lesdites deux rainures et par le fait que deux tuiles adjacentes de ladite couronne sont positionnées à cheval en regard de ladite découpe afin d'empêcher la sortie d'une tuile par ladite découpe.

Avantageusement, lorsque la chambre de combustion est annulaire, c'est-à-dire lorsque la paroi structurelle comporte une virole extérieure et une virole intérieure reliées en amont par un fond de chambre, la virole extérieure et la virole intérieure sont monoblocs.

Avantageusement, lorsque la chambre de combustion comporte une zone primaire et une zone de dilution alimentées en air par des orifices, lesdits orifices sont réalisés sous la forme de tubes munis de collerettes d'appui et montés dans des alésages prévus en correspondance dans la couronne de tuiles et la paroi structurelle.

Les tuiles sont, de préférence, composées de trois éléments superposés : une paroi métallique exteme multiperforée, une paroi métallique intérieure multiperforée, et une paroi médiane poreuse interposée entre la paroi métallique extérieure et la paroi métallique intérieure. La paroi médiane poreuse est réalisée en acier inoxydable. Les perforations de la paroi métallique extérieure sont disposées en quinconce par rapport aux perforations de la paroi métallique intérieure afin de ralentir le débit d'air de refroidissement dans la paroi poreuse et créer ainsi un meilleur échange de chaleur.

D'autres avantages et caractéristiques de l'invention ressortiront à la lecture de la description suivante faite à titre d'exemple et en référence aux dessins annexés dans lesquels :
la figure 1 est un schéma de principe montrant le montage d'une couronne de tuiles,
la figure 2 est une coupe axiale d'une chambre de combustion selon une première variante de réalisation,
la figure 3 est une coupe axiale d'une autre variante de réalisation de la chambre de combustion selon l'invention, et
la figure 4 montre en perspective et en coupe une tuile selon l'invention.

Le dessin montre une chambre de combustion 1 annulaire qui comporte une virole extérieure 2 et une virole intérieure 3 reliées en amont par un fond de chambre 4 et délimitant en aval une sortie 5 pour les gaz chauds. Le fond de chambre 4 est équipé d'un dispositif d'injection 6. Les viroles 2 et 4 et le fond de chambre 4 délimitent un espace annulaire dont la partie amont constitue la zone primaire 7, la partie centrale constitue la zone de dilution 8 et la partie aval constitue le convergent 9 de sortie de chambre.

Les viroles 2 et 3 sont monoblocs et elles assurent avec le fond de chambre 4 la rigidité de la chambre de combustion. Elles présentent sur l'une de leur face une pluralité de rainures opposées 10a, 10b délimitées chacune par une aile annulaire, respectivement 11a, 11b, qui est espacée de la virole correspondante et sensiblement parallèle à cette dernière.

Une couronne 12 de tuiles 13 juxtaposées circonférentiellement est accrochée par ses bords amont et aval dans chaque paire de rainures opposées 10a, 10b.

L'aile 11b présente une découpe circonférentielle 15 dont la largeur permet de passer librement les tuiles 13 de la couronne 12 lors du montage de celle-ci. Les tuiles 13 sont introduites successivement par la découpe 15 et engagées par rotation dans les rainures opposées 10a et 10b.

Lorsque la dernière tuile est introduite par la découpe 15, la couronne 12 est tournée par rapport à la virole correspondante d'un angle tel que deux tuiles adjacentes sont positionnées à cheval en regard de la découpe 15, de manière à empêcher la sortie d'une tuile par cette découpe 15.

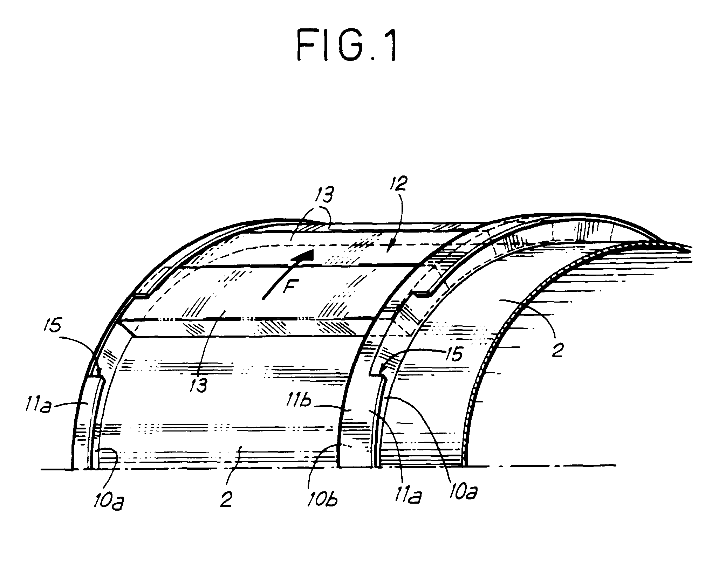

La figure 1 montre le principe du montage d'une tuile 13 de la couronne 12. La tuile 13 est introduite de telle manière que son extrémité amont soit positionnée dans la rainure opposée 10a, puis on la glisse dans les deux rainures 10a et 10b en la déplaçant dans le sens de la flèche F.

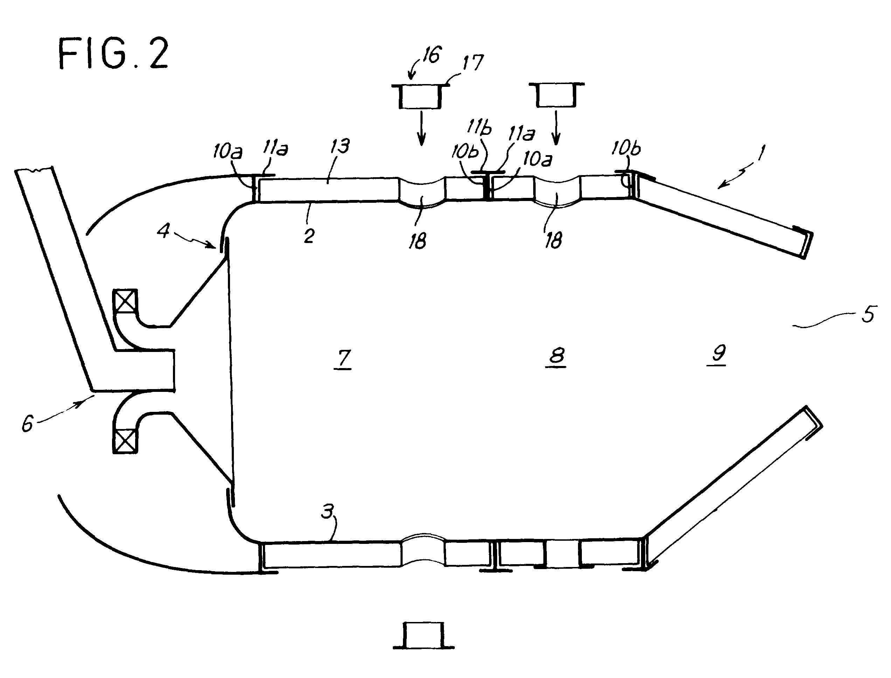

Selon la variante de réalisation représentée sur la figure 2, les tuiles 13 sont disposées à l'extérieur des viroles structurelles 2 et 3.

La référence 16 représente un tube fileté muni d'une collerette d'appui 17. Le tube 16 constitue l'orifice d'entrée d'air soit dans la zone primaire 7 ou la zone de dilution 8. Il est destiné à être monté soit par vissage, soit en force, dans les alésages 18 prévus en correspondance dans la couronne 12 et la virole extérieure 2.

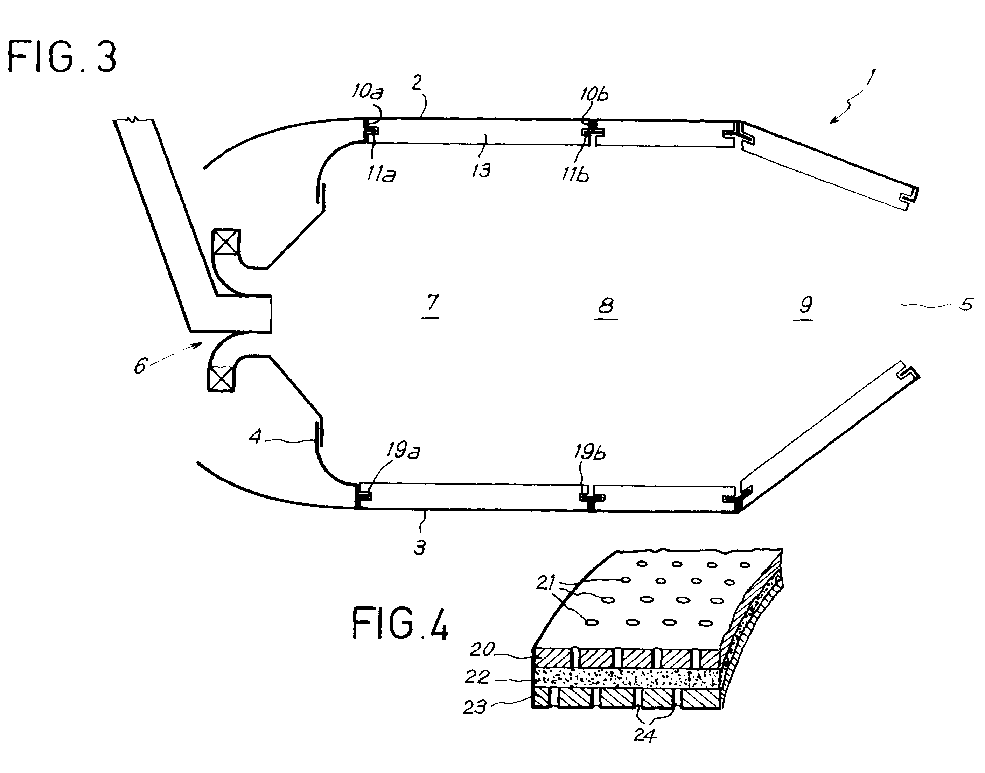

Selon la variante de réalisation représentée sur la figure 3, les tuiles sont disposées sur la face intérieure des viroles 2 et 3, c'est-à-dire à l'intérieur de la chambre de combustion. Dans cette variante, les tuiles 13 comportent à leurs extrémités amont et aval des rainures 19a et 19b dans lesquelles logent les ailes 11a et 11b.

Les tuiles 13 sont réalisées de façon à créer une surface d'échange importante. Pour réaliser cette surface d'échange, les tuiles sont composées de trois éléments surperposés :
une paroi métallique extérieure 20 multiperforée dont les perforations 21 sont calibrées de manière à doser le débit d'air de refroidissement les traversant ;
une paroi médiane 22 poreuse en acier inoxydable pouvant être par exemple de l'hastelloy X. La porosité est réalisée par métallurgie des poudres, une mousse métallique, un conglomérat de billes ou tout autre procédé connu ;
une paroi métallique intérieure 23 multiperforée identique à la paroi extérieure 20, mais disposée de telle manière que les perforations 24 de cette paroi 23 soient disposées en quinconce par rapport aux perforations 21 de la paroi extérieure 20, ceci pour ralentir le débit de refroidissement dans la paroi poreuse et créer ainsi un meilleur échange de chaleur. Les trois parois 20, 22 et 23 peuvent être liées entre elles par exemple par brassage de leurs extrémités. Elles peuvent plus simplement être engagées dans les rainures 10a et 10b des viroles 2 et 3 sans liaison entre elles.

## Revendications

1. Chambre de combustion pour turboréacteur comportant une paroi structurelle (2, 3) recouverte sur l'une de ses faces par au moins une couronne (12) de tuiles (13) juxtaposées circonférentiellement, ladite couronne (12) étant accrochée par ses bords amont et aval dans deux rainures opposées (10a, 10b) délimitées chacune par une aile (11a, 11b) annulaire espacée de la paroi structurelle (2,3),
caractérisée en ce que l'une au moins desdites ailes (11b) comporte une découpe (15) circonférentielle adaptée pour permettre le montage de ladite couronne (12) de tuiles (13) par introduction successives des tuiles (13) de ladite couronne (12) par ladite découpe (15) et engagement par rotation dans lesdites deux rainures (10a, 10b) et en ce que deux tuiles adjacentes de ladite couronne sont positionnées à cheval en regard de ladite découpe (15) afin d'empêcher la sortie d'une tuile (13) par ladite découpe (15).

2. Chambre de combustion selon la revendication 1 dans laquelle la paroi structurelle comporte une virole extérieure (2) et une virole intérieure (3) reliées en amont par un fond de chambre (4), caractérisée en ce que la virole extérieure (3) et la virole intérieure (2) sont monoblocs.

3. Chambre de combustion selon la revendication 2 comportant une zone primaire (7) et une zone de dilution (8) et des orifices d'entrée d'air dans la zone primaire (7) et la zone de dilution (8), caractérisé en ce que lesdits orifices sont réalisés sous la forme de tubes (16) munis de collerettes d'appui (17) et montés dans des alésages (18) prévus en correspondance dans la couronne (12) de tuiles (13) et la paroi structurelle (2, 3).

4. Chambre de combustion selon l'une quelconque des revendications 1 à 3, caractérisée en ce que la couronne (12) de tuiles (13) est disposée sur la face de la paroi structurelle située à l'extérieur de ladite chambre de combustion.

5. Chambre de combustion selon l'une quelconque des revendications 1 à 3, caractérisée en ce que la couronne (12) de tuiles (13) est disposée sur la face de la paroi structurelle (2, 3) située à l'intérieur de ladite chambre de combustion.

6. Chambre de combustion selon l'une des revendications 1 à 5, caractérisée en ce que les tuiles (13) comportent en amont et en aval des rainures (19a, 19b) destinées à coopérer avec les ailes (11a,11b).

7. Chambre de combustion selon l'une des revendications 1 à 6, caractérisée en ce que les tuiles (13) comportent trois éléments superposés : une paroi métallique extérieure (20) multiperforée, une paroi métallique intérieure (23) multiperforée et une paroi médiane (22) poreuse interposée entre la paroi métallique extérieure (20) et la paroi métallique intérieure (23).

8. Chambre de combustion selon la revendication 7, caractérisée en ce que la paroi médiane poreuse est réalisée en acier inoxydable.

## Patentansprüche

1. Brennkammer für TL-Triebwerke, bestehend aus einer Strukturwand (2, 3), die an einer ihrer Seiten mit mindestens einem Kranz (12) von auf der Umfangslinie nebeneinanderliegenden Belagplatten (13) bedeckt ist, wobei der genannte Kranz (12) mit seinen stromaufwärtigen und stromabwärtigen Kanten in zwei einander gegenüberliegenden Nuten (10a, 10b) sitzt, die jeweils durch ein ringförmiges Band (11a, 11b) gebildet werden, das sich in Abstand von der Strukturwand (2, 3) befindet,
dadurch gekennzeichnet, daß mindestens eines der genannten Bänder (11b) einen Ausschnitt (15) an der Umfangslinie aufweist, der so konzipiert ist, daß der genannte Kranz (12) von Belagplatten (13) eingebaut werden kann, indem die Belagplatten (13) des genannten Kranzes (12) nacheinander in den genannten Ausschnitt (15) eingesetzt werden und durch Drehen in den genannten zwei Nuten (10a, 10b) in Eingriff gebracht werden, und dadurch, daß zwei aneinanderstoßende Belagplatten des genannten Kranzes von beiden Seiten in den Bereich des genannten Ausschnitts (15) hineinragen, um das Herausfallen einer Belagplatte (13) durch den genannten Ausschnitt (15) zu vermeiden.

2. Brennkammer nach Anspruch 1, bei der die Strukturwand einen Außenring (2) und einen Innenring (3) aufweist, die stromaufwärts durch eine Kammerrückwand (4) miteinander verbunden sind,
dadurch gekennzeichnet, daß der Außenring (2) und der Innenring (3) aus einem Stück ausgeführt sind.

3. Brennkammer nach Anspruch 2, die einen Primärbereich (7) und einen Verdünnungsbereich (8) sowie Lufteinlaßöffnungen in dem Primärbereich (7) und dem Verdünnungsbereich (8) aufweist,
dadurch gekennzeichnet, daß die genannten Öffnungen in der Form von Rohren (16) ausgeführt sind, die mit Befestigungsflanschen (17) versehen sind und in Bohrungen eingesetzt sind, die in dem Kranz (12) von Belagplatten (13) und der Strukturwand (2, 3) so vorgesehen sind, daß sie sich decken.

4. Brennkammer nach einem der Ansprüche 1 bis 3,
dadurch gekennzeichnet, daß der Kranz (12) von Belagplatten (13) an der Seite der Strukturwand angeordnet ist, die sich außerhalb der genannten Brennkammer befindet.

5. Brennkammer nach einem der Ansprüche 1 bis 3,
dadurch gekennzeichnct, daß der Kranz (12) von Belagplatten (13) an der Seite der Strukturwand (2, 3) angeordnet ist, die sich innerhalb der genannten Brennkammer befindet.

6. Brennkammer nach einem der Ansprüche 1 bis 5,
dadurch gekennzeichnet, daß die Belagplatten (13) stromaufwärts und stromabwärts Nuten (19a, 19b) aufweisen, die mit den Bändern (11a, 11b) zusammenwirken sollen.

7. Brennkammer nach einem der Ansprüche 1 bis 6,
dadurch gekennzeichnet, daß die Belagplatten (13) aus drei übereinandergeschichteten Elementen bestehen: einer mehrfach perforierten äußeren Metallwand (20), einer mehrfach perforierten inneren Metallwand (23) und einer porösen Mittelwand (22), die zwischen der äußeren Metallwand (20) und der inneren Metallwand (23) angeordnet ist.

8. Brennkammer nach Anspruch 7,
dadurch gekennzeichnet, daß die poröse Mittelwand aus rostfreiem Stahl ausgeführt ist.

## Claims

1. A combustion chamber for a turbojet engine comprising a structural wall (2, 3) covered on one of its faces by at least one ring (12) of circumferentially juxtaposed panels (13), the ring (12) being engaged by its upstream and downstream edges in two opposite grooves (10a, 10b) each bounded by an annular wing (11a, 11b) spaced apart from the structural wall (2, 3),
characterised in that at least one (11b) of the wings is formed with a peripheral rebate (15) adapted for the assembly of the ring (12) of panels (13) by the consecutive introduction of the panels through the rebate (15) and engagement by rotation in the two grooves (10a, 10b), and in that two adjacent panels of the ring are positioned to straddle the rebate (15) in order to prevent the egress of a panel (13) through the rebate (15).

2. A combustion chamber according to claim 1 wherein the structural wall comprises an outer shell (2) and an inner shell (3) interconnected upstream by a chamber end piece (4), characterised in that the outer shell (3) and the inner shell (2) are integral.

3. A combustion chamber according to claim 2 comprising a primary zone (7) and a dilution zone (8) and inlet air orifices in the primary zone (7) and dilution zone (8), characterised in that the orifices are in the form of tubes (16) having support collars (17) and disposed in registering bores (18) in the ring (12) of panels (13) and the structural wall (2, 3).

4. A combustion chamber according to any of claims 1 to 3, characteried in that the ring (12) of panels (13) is disposed on that face of the structural wall which is outside the combustion chamber.

5. A combustion chamber according to any of claims 1 to 3, characterised in that the ring (12) of panels (13) is disposed on that face of the structural wall (2, 3) which is inside the combustion chamber.

6. A combustion chamber according to any of claims 1 to 5, chartacterised in that the panels (13) are formed upstream and downstream with grooves (19a, 19b) adapted to co-operate with the wings (11a, 11b).

7. A combustion chamber according to any of claims 1 to 6, characterised in that the panels (13) comprise three elements disposed one above another, namely a metal multiperforate outer wall (20), a metal multiperforate inner wall (23) and a porous intermediate wall (22) between the outer wall (20) and the inner wall (23).

8. A combustion chamber according to claim 7, characterised in that the porous intermediate wall is made of stainless steel.
